# EUROPEAN PATENT APPLICATION

(11) **EP 1 613 101 A1**
(43) Date of publication of application: **04.01.2006**
(21) Application number: 05300485.9
(22) Date of filing: 16.06.2005
(51) Int. Cl.: H04N 9/31

(54) **Rear projection television set**

(30) Priority: 30.06.2004 EP 04015314
(71) Applicant: Thomson Licensing, 92100 Boulogne Billancourt (FR)
(72) Inventor: Chauvin, Jacques, 78078 Niedereschach (DE); Runtze, Albert, 78052 Villingen-Schwenningen (DE); Louvel, Jean-Paul, 78086 Brigachtal (DE)
(74) Representative: Arnold, Klaus-Peter

(57) **Abstract**

The rear projection television set comprises three CRT picture tubes for the colors red, green and blue for displaying a picture on a screen, and for a geometrical pre-correction, permanent magnets are arranged only on the CRT picture tubes red and blue. A digital signal processing circuit is arranged for providing a horizontal convergence correction by use of non-linear image mapping. A north-south pincushion correction is made with a correction circuit (6) having only a single power amplifier and a vertical deflection correction coil (5) for the three color tubes, or with a correction circuit (1), which provides a current being coupled and added to a vertical deflection current via a transformer (T).

## Description

### BACKGROUND

The present invention relates to a rear projection television set comprising three CRT (cathode ray tube) picture tubes for a picture display on a screen.

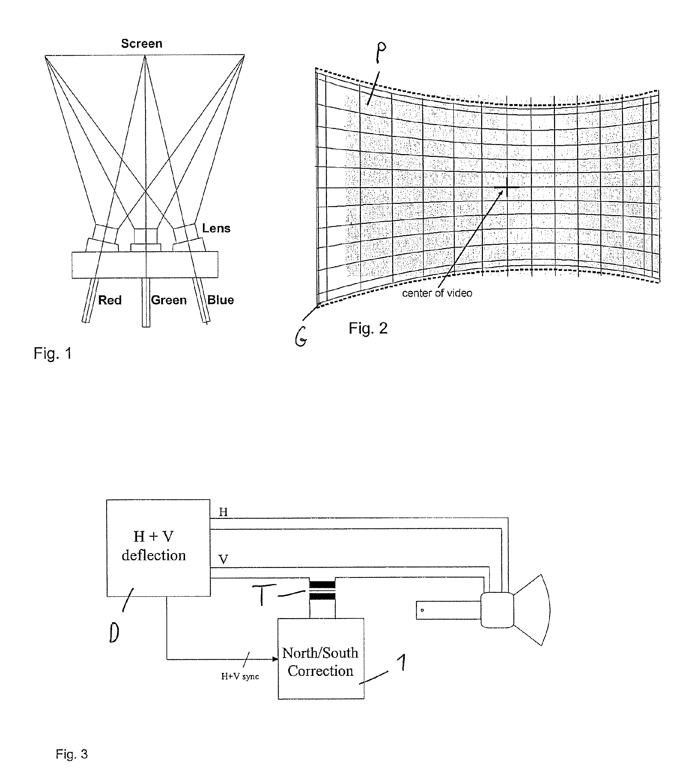

The principle of a CRT based projection television set is to superimpose on a screen the pictures of three picture tubes for the colors red, green and blue, projected through three lenses onto a display screen to construct a color picture, as shown in Fig 1. The projected red, green and blue pictures have geometric distortions and need respective correction circuits.

A convergence correction circuit corrects distortions in creating a correction at the tube level. An auxiliary deflection yoke on each tube, not shown in Fig. 1, controlled by horizontal and vertical correction currents usually does the remaining correction. Six power amplifiers are needed, driven by a digital convergence correction circuit, one each for a vertical and a horizontal correction for each of the three tubes. The geometry and convergence correction values for a respective rear projection television set are stored in a non-volatile memory. A current supply with six power amplifiers in particular for a rear projection television set is described for example in US 6,456,656.

The largest distortion is due to the fact that the optical axis of the three tubes are not perpendicular to the screen, but only for the green tube, which is arranged in the centre between the red and the blue tube, as shown in Fig. 1. In Fig. 2, a grid G of a projected blue picture is shown without pre-correction as an overlay over the correct picture size P. As can be seen in Fig. 2, the blue picture is projected with an angle of some degrees that create trapezium and linearity distortions, which are considerably larger on the left side of the screen.

### SUMMARY OF THE INVENTION

The invention specifies a rear projection television set comprising three CRT picture tubes, which comprises a vertical trapezium correction with magnets on the yokes of the tubes red and blue, without any power dissipation, and a convergence correction for the three colors by a digital non-linear image mapping circuit at the video signal level. The power circuit is considerably reduced with this arrangement, avoiding therefore the above mentioned six power amplifiers.

Advantageously, a remaining North-South pincushion correction is made with a correction circuit having only a single power amplifier and a vertical deflection correction coil for the three color tubes, or with a correction circuit, which provides a current being coupled and added to a vertical deflection current via a transformer.

Only additional current-less, fixed permanent magnets are used for the vertical trapezium pre-correction. The non-linear image mapping can be included advantageously with only little effort into already existing digital signal processing circuits. If the non-linear image mapping would be used also for the vertical trapezium correction, it would have in consequence a degradation of the vertical resolution, showing visible artefacts. The advantages of the invention are therefore a cost saving and simplification of the hardware, without a reduction of the picture quality.

### SHORT DESCRIPTION OF THE DRAWINGS

Exemplary embodiments of the invention are illustrated in the drawings and are explained in more detail in the following description, the figures showing:
- Fig. 1: Conventional tube positions within a CRT rear projection television set, according to prior art,
- Fig. 2: projected blue picture without a pre-correction,
- Fig. 3: North/South pincushion correction with a coupling transformer for the vertical deflection current,
- Fig. 4: a power amplifier with booster control of a North/South pincushion correction circuit,
- Fig. 5: North/South pincushion correction with an additional deflection coil,
- Fig. 6: a non-linear image mapping arrangement for a convergence correction having a separate convergence correction circuit, and
- Fig. 7: a non-linear image mapping arrangement for a convergence correction integrated in an up-conversion signal processing circuit.

### DETAILED DESCRIPTION OF THE INVENTION

### Implementation of geometry pre-correction

Symmetrical vertical trapezium distortion for the external tubes red and blue is done with permanent magnets, arranged on each of the yokes of the blue and red picture tubes. This process does not deteriorate the spot size on the screen of a rear projection television set. The yokes with a respective permanent magnet can be specifically designed in particular for each display size, i.e. 40", 52" etc, to minimize tolerances for an improved picture sharpness.

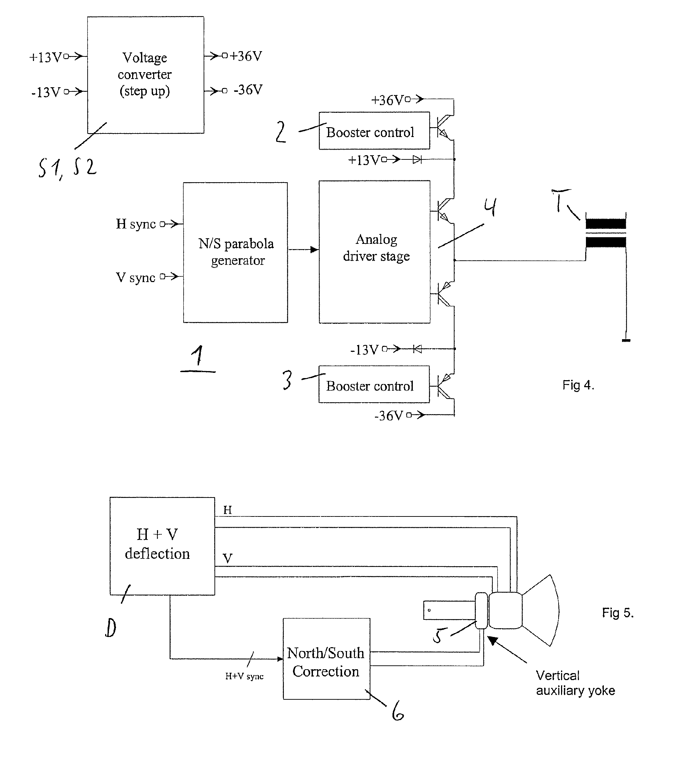

An East-West pincushion correction for a correction as illustrated in Fig. 2 is provided by a main deflection circuit D, as shown in Fig. 3 in a simplified manner. Fig. 2 shows an example of a real distortion with East-West pincushion for the color blue.

### Implementation of North-South pincushion pre-correction

A second cause of distortion is the pincushion effect. It is usually worse in a projection television set than for a direct view CRT television set due to the shape of the phosphor surface of each of the tubes for red, green and blue, which is generally concave for optical reasons.

The North-South (N/S) pincushion can be corrected advantageously by means of the following embodiments:
1. A North/South correction circuit 1 may be used to correct the North/South error, as shown in Fig. 3. The circuit 1 generates a correction current that is added to the vertical deflection current provided by a deflection stage D via a transformer T. Only one circuit 1 is required for all three tubes, because one deflection stage D drives all three tubes.

As a variant to save power in the North/South amplifier, step-up converters S1, S2, may be used, which generate output voltages that are modulated to the voltage needs of the power stage at a respective vertical deflection rate, as shown in Fig. 4. The step-up converters S1, S2 generate output voltages of +/- 36 Volts in this embodiment. These voltages are coupled via a booster control 2, 3 to the DC supply lines of an analog driver stage 4 of the circuit 1. The analog driver stage 4 operates in response to horizontal and vertical sync pulses H, V for providing a North/South correction in accordance with Fig. 3.

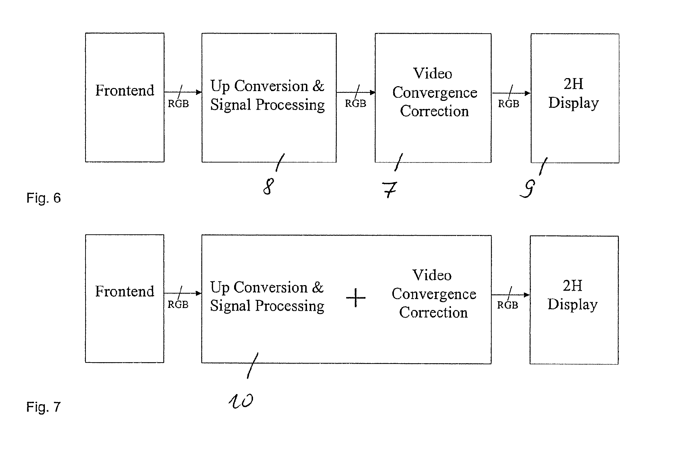

Second embodiment of N/S pincushion correction:
Auxiliary convergence vertical yoke coils 5 are placed on each of the picture tubes R, G, B, the three coils being connected in parallel and connected with a North/South correction circuit 6 as shown in Fig. 5. This variant has much less losses as compared with the injection into the vertical deflection current, as shown in Fig. 3. Because the three coils are connected in parallel, only one power amplifier being included in the North/South correction circuit 6 is necessary for this correction.

In a further embodiment the main vertical deflection yoke design is changed to provide some percentage of the needed N/S correction, just enough not to disturb the spot size. This will save some power in the respective N/S correction power stage.

### Implementation of convergence correction with non-linear image mapping

Horizontal linearity distortion can be corrected easily with digital non-linear image mapping, as known from prior art. The RGB non-linear image mapping could be integrated in the video up-converter or a specific IC, with digital correction parameters stored in a non-volatile memory, included in the chain of the digital video signal circuits.

The figure 6 shows the video chain with the video convergence correction circuit 7 inserted between a signal processing part 8 and a display part 9. This is like an add-on for existing concepts.

In another embodiment, the video convergence correction is fully integrated in a signal processing part 10, as shown in Fig. 7. This could be used in concepts with enough processing power. This embodiment has the advantage to use frame memories and converter ICs as a common resource.

Therefore, the six power amplifiers and the respective power supply, as described for example in US 6,456,656, are no more required, resulting in an essential cost saving and weight reduction.

## Claims

1. Rear projection television set comprising three CRT picture tubes for the colors red, green and blue for displaying a picture on a screen, **characterized in that**
the rear projection television set comprises magnets arranged only on the CRT picture tubes red and blue for a geometrical pre-correction, and
a digital signal processing circuit for providing a convergence correction by use of non-linear image mapping.

2. Rear projection television set according to claim 1, **wherein** the magnets are permanent magnets, which are arranged on the yokes of the CRT picture tubes red and blue for providing a vertical trapezium correction as the geometrical pre-correction.

3. Rear projection television set according to claim 1 or 2, **wherein** the magnets have a design in accordance with the size of the picture display.

4. Rear projection television set according to claim 1, 2, or 3, wherein the digital signal processing circuit using non-linear image mapping provides only a correction of horizontal linearity distortion.

5. Rear projection television set according to one of the preceding claims, **wherein** a north/south pincushion correction is made by a magnet coil (5) arranged on each of the picture tubes red, green, and blue, each coil being powered by a correction circuit (6) having only a single power amplifier.

6. Rear projection television set according to claim 5, **wherein** the magnet coils (5) are arranged as a vertical auxiliary yoke on each color picture tube.

7. Rear projection television set according to one of the preceding claims 1 - 4, **wherein** a North/South pincushion correction is performed by using a correction circuit (1), which provides a current being coupled and added via a transformer (T) to the vertical deflection current.

8. Rear projection television set according to one of the preceding claims, **wherein** the television set comprises a non-volatile memory, in which digital correction parameters are stored for providing non-linear image mapping for video convergence correction after an up-conversion of the RGB signals.

9. Rear projection television set in accordance with claim 8, **wherein** in the non-volatile memory data are stored corresponding to geometric areas of the display for providing convergence correction.

10. Rear projection television set according to one of the preceding claims, **wherein** an East-West pincushion correction is provided by a main deflection circuit.
